# EUROPÄISCHE PATENTSCHRIFT

(11) **EP 1 232 917 B1**
(45) Veröffentlichungstag und Bekanntmachung des Hinweises auf die Patenterteilung: **08.09.2004**
(21) Anmeldenummer: 02090059.3
(22) Anmeldetag: 14.02.2002
(51) Int. Cl.: B60R 22/46

(54) **Antriebseinheit für einen Sicherheitsgurtstraffer**
Drive unit for a seat belt pretensioner
Unité d'entraînement pour un prétensionneur de ceinture de sécurité

(30) Priorität: 19.02.2001 DE 10107656
(43) Veröffentlichungstag der Anmeldung: 21.08.2002
(73) Patentinhaber: TAKATA-PETRI (Ulm) GmbH, 89081 Ulm (DE)
(72) Erfinder: Beck, Dieter, 89547 Gerstetten (DE)
(74) Vertreter: Rummler, Felix Dipl. Ing.

(56) Entgegenhaltungen:
- EP-A- 0 992 406
- DE-A- 4 444 775
- DE-A- 19 643 402
- DE-A- 19 826 305

## Beschreibung

Die Erfindung betrifft eine Antriebseinheit für Sicherheitsgurtstraffer, die einen Antrieb aufweisen, der bei Ansprechen eines Beschleunigungssensors auslösbar und mit der Gurtaufwickelrolle drehfest koppelbar ist. Der Antrieb befindet sich in einer Antriebskammer, die durch zwei parallel zueinander verlaufende und miteinander verbundene Platten gebildet wird und die ein Antriebsband aufweist, von dem zumindest ein Ende an einer Antriebswelle befestigt ist. Bei Ansprechen des Beschleunigungssensors wird das Antriebsband von einer Seite her durch ein von einem Gasgenerator stammendes, expandierendes Gas derart beaufschlagt, daß sich das Antriebsband abwickelt und dabei die Antriebswelle antreibt. Antriebseinheiten dieser Art sind grundsätzlich bekannt (vgl. DE-A-199 61 109.2).

Eine ähnliche Antriebseinheit ist aus der DE 4 444 775 A1 bekannt.

Die Leistung einer solchen Antriebseinheit hängt unter anderem von der Höhe des Druckes ab, der sich durch das expandierende Gas innerhalb des Raumes aufbaut, der durch die Platten und einer durch das Antriebsband geformten Schlaufe gebildet wird. Der sich aufbauende Druck wird jedoch durch Gas vermindert, welches über die Antriebsband/Platten-Grenzfläche entweicht.

Eine Möglichkeit, die Qualität der Gasabdichtung zwischen dem Antriebsband und den Platten zu verbessern, besteht darin, ein doppellagiges Antriebsband zu verwenden, das mit einem zusätzlichen, zwischen den Lagen des Antriebsbandes gelegenen gummiartigen Dichtungsband versehen ist, welches an den Kanten des Antriebsbandes ein wenig herausragt und auf diese Weise für eine effektivere Dichtwirkung des Antriebsbandes und damit für einen verminderten Gasverlust über die Antriebsband/Platten-Grenzfläche sorgt.

Nachteil einer solchen Vorrichtung ist jedoch die relativ aufwendige Herstellung der mehrlagigen Antriebsbänder. Eine optimale Dichtungswirkung kann nur bei exakter Parallelität und absolut konstanter Breite der drei Bänder erreicht werden. Die für eine effektive Dichtwirkung des Antriebsbandes notwendigen geringen Toleranzen machen die Produktion solcher Antriebsbänder kompliziert und teuer.

Der Erfindung liegt daher die Aufgabe zugrunde, eine Antriebseinheit für Sicherheitsgurtstraffer mit erhöhter Leistung bei vereinfachtem Aufbau zu schaffen.

Zur Lösung dieser Aufgabe ist eine Vorrichtung mit den Merkmalen nach Anspruch 1 vorgesehen.

Erfindungsgemäß sind dabei die kammerseitigen Oberflächen der Platten teilweise oder vollständig mit einem Beschichtungsmaterial beschichtet, das einen Gasaustausch über die Antriebsband/Platten-Grenzfläche verringert. Aufgrund dieser Ausbildung läßt sich ein hoher Druck auch unter Verwendung eines einlagigen Antriebsbandes aufbauen. Darüber hinaus lassen sich durch die Beschichtung der Platten Produktionstoleranzen in der Breite des Antriebsbandes und in der Parallelität der Platten ausgleichen. Die vorliegende Erfindung ermöglicht daher eine vereinfachte Herstellung von Antriebseinheiten für Sicherheitsgurtstraffer bei gleichzeitiger Gewährleistung hoher Leistung durch gute Dichtwirkung des Antriebsbandes.

Vorteilhafte Ausführungsformen der Erfindung sind in den Unteransprüchen, der Beschreibung und den Zeichnungen beschrieben.

So kann das Beschichtungsmaterial nach einer ersten vorteilhaften Ausführungsform mehrere Schichten aufweisen, wobei die einzelnen Schichten aus unterschiedlichen Materialien bestehen können. Dies ermöglicht eine gezielte Anpassung der Beschichtung an das Antriebsband mit dem Ziel, eine verbesserte Dichtwirkung des Antriebsbandes zu erreichen.

Besonders vorteilhaft ist es, wenn das Beschichtungsmaterial und/oder die Dicke der Beschichtung einer Platte in verschiedenen Plattenabschnitten variiert. Auf diese Weise läßt sich der Gasaustausch über die Antriebsband/Platten-Grenzfläche in den verschiedenen Plattenabschnitten variieren. Dies führt zu einem vorherbestimmbaren Druckverlauf während des Antriebsbandabwicklungsprozesses, was eine kontrollierbare, dynamische Straffung des Sicherheitsgurtes ermöglicht.

In einer bevorzugten baulichen Ausführung der Erfindung wird das Beschichtungsmaterial in Form einer oder mehrerer Folien auf die Platten aufgebracht. Die Verwendung von selbstklebenden Folien oder von Klebstoffen zum Aufbringen der Folien bedeutet eine besonders einfache Art der Plattenbeschichtung.

Besonders vorteilhaft ist es, wenn das Beschichtungsmaterial weich ist. Dann nämlich können die Kanten des Antriebsbandes teilweise in das Beschichtungsmaterial eindringen und so den Gasaustausch über die Antriebsband/Platten-Grenzfläche zusätzlich reduzieren.

Nach einer weiteren bevorzugten Ausführung der Erfindung ist durch das Antriebsband eine oberflächennahe Schicht des Beschichtungsmaterials abtragbar, welche sich bei Auslösung des Antriebs in Abwickelrichtung vor dem Antriebsband aufhäuft. Diese Aufhäufung bildet einen weiteren Schutz vor Gasverlust über die Antriebsband/Platten-Grenzfläche. Auf diese Weise kann ein maximaler Druck aufgebaut werden.

Nachfolgend wird die vorliegende Erfindung rein beispielhaft anhand einer vorteilhaften Ausführungsform unter Bezugnahme auf die beigefügten Zeichnungen beschrieben. Es zeigen:
- Fig. 1: eine schematische, perspektivische Ansicht einer erfindungsgemäßen Antriebskammer,
- Fig. 2: eine schematische Querschnittsansicht einer erfindungsgemäßen Antriebskammer, und
- Fig. 3: eine schematische Querschnittsansicht der Antriebskammer von Fig. 2, wobei das Antriebsband bereits um eine Strecke bewegt wurde.

Bei der hier dargestellten Ausführungsform handelt es sich um pyrotechnisch angetriebene Antriebseinheiten, wie sie in der Deutschen Patentanmeldung 199 61 109.2 beschrieben sind, die durch Bezugnahme auch zum Gegenstand dieser Anmeldung gemacht wird.

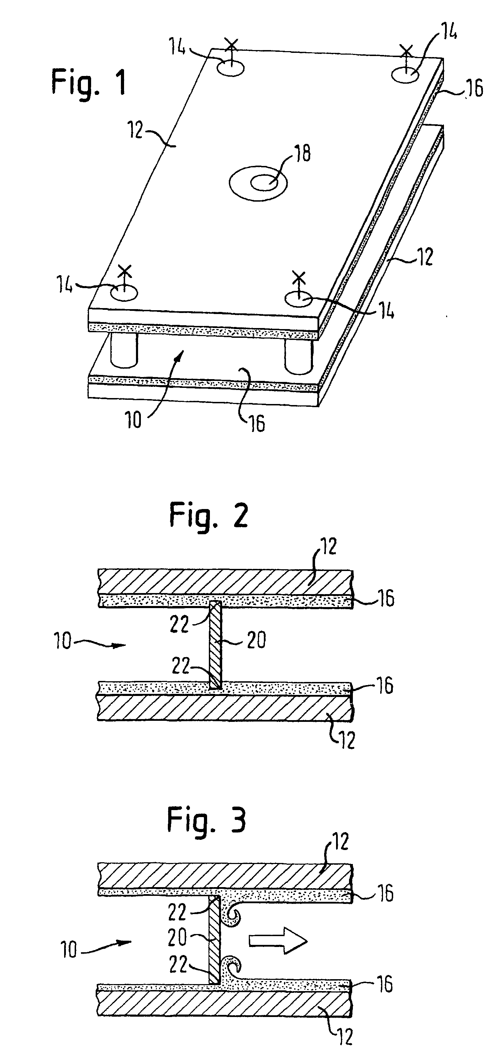

In Fig. 1 ist eine Antriebskammer 10 gezeigt, die zwei parallel zueinander verlaufende Platten 12 aufweist, die durch Bolzen 14 und Abstandshalter (nicht gezeigt) miteinander verbunden sind. Die Platten 12 sind auf ihrer kammerseitigen Oberfläche mit einem Beschichtungsmaterial 16 beschichtet.

Innerhalb der Antriebskammer verläuft senkrecht zu den Platten 12 eine Antriebswelle 18, die bei Ansprechen eines Beschleunigungssensors (nicht gezeigt) über eine Kupplung (nicht gezeigt) drehfest mit der Gurtaufwickelrolle (nicht gezeigt) koppelbar ist.

Zwischen den Platten 12 verläuft senkrecht auf den Platten stehend ein Antriebsband 20 (Fig. 2), dessen Breite auf den Abstand der Platten angepaßt ist, so daß die Antriebsbandkanten 22 mit dem Beschichtungsmaterial 16 der Platten 12 in Berührung stehen. Wie Fig. 2 zeigt, können die Antriebsbandkanten 22 in das Beschichtungsmaterial 16 eindringen, sofern es sich wie bei dem dargestellten Ausführungsbeispiel um ein weiches Beschichtungsmaterial 16 handelt.

Zumindest ein Ende des Antriebsbandes 20 ist an der Antriebswelle 18 befestigt. Das Antriebsband 20 bildet im Ruhezustand zwischen seinen Befestigungsstellen (nicht gezeigt) auf der Antriebswelle 18 eine kleine geschlossene Schlaufe. Innerhalb dieser Schlaufe münden Gasaustrittsöffnungen eines Gasgenerators (nicht gezeigt), der neben der Antriebswelle 18 zwischen den Platten 12 angebracht ist.

Wird der Gasgenerator aufgrund eines Unfalls gezündet, tritt aus den Gasaustrittsöffnungen Gas in das Innere der Schlaufe ein, worauf die Schlaufe sich unter Ausübung eines Drehmomentes in Gurtaufwickelrichtung auf die Antriebswelle 18 ausdehnt.

Beim Ausdehnen der Schlaufe befinden sich die Antriebsbandkanten 22 in dichtendem Gleiteingriff mit dem Beschichtungsmaterial 16 der Platten 12, wobei durch das Beschichtungsmaterial 16 der Platten 12 Toleranzen in der Breite des Antriebsbandes 20 oder in der Parallelität der Platten 12 kompensiert werden, so daß innerhalb der Schlaufe auch unter Verwendung von einlagigen Antriebsbändern 20 der zur Gurtstraffung erforderliche Druck aufgebaut werden kann.

Fig. 3 zeigt die Ausführungsform von Fig. 2, wobei jedoch das Antriebsband 20 bereits eine Wegstrecke zurückgelegt hat. Die Antriebsbandkanten 22 dringen teilweise in das Beschichtungsmaterial 16 ein, wobei durch das Antriebsband 20 eine oberflächennahe Schicht des Beschichtungsmaterials 16 abgetragen wird. Hierdurch häuft sich bei Ausdehnen der Schlaufe in Ausdehnungsrichtung vor dem Antriebsband 20 Beschichtungsmaterial 16 auf (Fig. 3), was den Gasverlust über die Antriebsband/Platten-Grenzfläche zusätzlich reduziert. Auf diese Weise kann sich ein erhöhter Druck innerhalb der Schlaufe aufbauen, wodurch die Leistung der Antriebseinheit erhöht wird.

### Bezugszeichenliste

- 10: Antriebskammer
- 12: Platte
- 14: Bolzen
- 16: Beschichtungsmaterial
- 18: Antriebswelle
- 20: Antriebsband
- 22: Antriebsbandkante

## Patentansprüche

1. Antriebseinheit für einen Gurtstraffer für Sicherheitsgurte, mit einem auslösbaren und mit der Gurtaufwickelrolle koppelbaren Antrieb, welcher sich in einer Antriebskammer (10) befindet, die durch zwei parallel zueinander verlaufende und miteinander verbundene Platten (12) gebildet wird und die ein Antriebsband (20) aufweist, von dem zumindest ein Ende an einer Antriebswelle (18) befestigt ist und das bei Ansprechen eines Beschleunigungssensors von einer Seite her durch ein von einem Gasgenerator stammendes, expandierendes Gas derart beaufschlagbar ist, daß sich das Antriebsband (20) abwickelt und dabei die Antriebswelle (18) antreibt,
**dadurch gekennzeichnet,**
**daß** die Platten (12) auf der kammerseitigen Oberfläche teilweise oder vollständig mit einem Beschichtungsmaterial (16) beschichtet sind, das einen Gasaustausch über die Antriebsband/Plattenoberflächen-Grenzfläche verringert.

2. Antriebseinheit nach Anspruch 1,
**dadurch gekennzeichnet,**
**daß** das Beschichtungsmaterial (16) mehrere Schichten aufweist.

3. Antriebseinheit nach einem der vorherigen Ansprüche,
**dadurch gekennzeichnet,**
**daß** das Beschichtungsmaterial (16) Schichten aus unterschiedlichen Materialien aufweist.

4. Antriebseinheit nach einem der vorherigen Ansprüche,
**dadurch gekennzeichnet,**
**daß** das Beschichtungsmaterial (16) und/oder die Dicke der Beschichtung einer Platte (12) in verschiedenen Plattenabschnitten variiert.

5. Antriebseinheit nach einem der vorherigen Ansprüche,
**dadurch gekennzeichnet,**
**daß** das Beschichtungsmaterial (16) der Platten (12) eine oder mehrere Folien aufweist.

6. Antriebseinheit nach Anspruch 5,
**dadurch gekennzeichnet,**
**daß** die Folien zur Beschichtung der Platten (12) selbstklebend oder mittels eines Klebstoffes aufgebracht sind.

7. Antriebseinheit nach einem der vorherigen Ansprüche,
**dadurch gekennzeichnet,**
**daß** das Beschichtungsmaterial (16) weich ist.

8. Antriebseinheit nach einem der vorherigen Ansprüche,
**dadurch gekennzeichnet,**
**daß** Kanten (22) des Antriebsbandes (20) teilweise in das Beschichtungsmaterial (16) eindringen.

9. Antriebseinheit nach einem der vorherigen Ansprüche,
**dadurch gekennzeichnet,**
**daß** durch das Antriebsband (20) eine oberflächennahe Schicht des Beschichtungsmaterials (16) abtragbar ist, welche sich bei Auslösung des Antriebs in Ausdehnungsrichtung vor dem Antriebsband (20) aufhäuft und so den Gasaustausch über die Antriebsband/Plattenoberflächen-Grenzfläche zusätzlich verringert.

10. Gurtstraffer für Sicherheitsgurte mit zumindest einer Antriebseinheit nach einem der vorherigen Ansprüche.

## Claims

1. Drive unit for a belt pretensioner for seat belts, having a releasable drive which can be coupled to the belt wind-on roller and is situated in a drive chamber (10) which is formed by two plates (12), which run parallel to each other and are connected to each other, and which has a drive belt (20) of which at least one end is fastened to a drive shaft (18) and which, upon reaction of an acceleration sensor, can be acted upon from one side by means of an expanding gas originating from a gas generator, in such a manner that the drive belt (20) unwinds and in the process drives the drive shaft (18), **characterized in that** the plates (12) are partially or completely coated on the chamber-side surface with a coating material (16) which reduces a gas exchange via the interface of the surfaces of the drive belt/plate.

2. Drive unit according to Claim 1, **characterized in that** the coating material (16) has a plurality of layers.

3. Drive unit according to one of the preceding claims, **characterized in that** the coating material (16) has layers of different materials.

4. Drive unit according to one of the preceding claims, **characterized in that** the coating material (16) and/or the thickness of the coating of a plate (12) varies/vary in different plate sections.

5. Drive unit according to one of the preceding claims, **characterized in that** the coating material (16) of the plates (12) has one or more films.

6. Drive unit according to Claim 5, **characterized in that** the films for coating the plates (12) are self-adhering or applied by means of an adhesive.

7. Drive unit according to one of the preceding claims, **characterized in that** the coating material (16) is soft.

8. Drive unit according to one of the preceding claims, **characterized in that** edges (22) of the drive belt (20) partially penetrate the coating material (16).

9. Drive unit according to one of the preceding claims, **characterized in that** the drive belt (20) can wear away a layer of the coating material (16) which is close to the surface and which, when the drive is triggered in the expansion direction, accumulates in front of the drive belt (20) and thus additionally reduces the gas exchange via the interface of the surfaces of the drive belt/plate.

10. Belt pretensioner for seat belts having at least one drive unit according to one of the preceding claims.

## Revendications

1. Unité d'entraînement pour un tendeur de ceinture pour des ceintures de sécurité, comportant un dispositif d'entraînement déclenchable et pouvant être couplé au rouleau d'enroulement de ceinture et qui est disposé dans une chambre d'entraînement (10), qui est formée par deux plaques (12) parallèles et reliées entre elles et comporte une bande d'entraînement (20), dont au moins une extrémité est fixée à un arbre d'entraînement (18) et qui, lors de la réponse d'un capteur d'accélération est chargé à partir d'un côté par un gaz qui provient d'un générateur de gaz et se détend, de telle sorte que la bande d'entraînement (20) se déroule et entraîne l'arbre d'entraînement (18), **caractérisée en ce**
**que** les plaques (12) sont recouvertes, sur la surface tournée du côté de la chambre, en partie ou en totalité par un matériau de revêtement (16), qui réduit un échange de gaz au niveau de l'interface bande d'entraînement / surfaces des plaques.

2. Unité d'entraînement selon la revendication 1, **caractérisée en ce que** le matériau de revêtement (16) comporte plusieurs couches.

3. Unité d'entraînement selon l'une des revendications précédentes, **caractérisée en ce que** le matériau de revêtement (16) comporte des couches formées de matériaux différents.

4. Unité d'entraînement selon l'une des revendications précédentes, **caractérisée en ce que** le matériau de revêtement (16) et/ou l'épaisseur du revêtement d'une plaque (12) varient dans différentes sections de la plaque.

5. Unité d'entraînement selon l'une des revendications précédentes, **caractérisée en ce que** le matériau de revêtement (16) des plaques (12) possède une ou plusieurs feuilles.

6. Unité d'entraînement selon la revendication 5, **caractérisé en ce que** les feuilles pour le revêtement des plaques (12) sont autoadhésives ou sont appliquées à l'aide d'un adhésif.

7. Unité d'entraînement selon l'une des revendications précédentes, **caractérisée en ce que** le matériau de revêtement (16) est mou.

8. Unité d'entraînement selon l'une des revendications précédentes, **caractérisée en ce que** des bords (22) de la bande d'entraînement (20) pénètrent partiellement dans le matériau de revêtement (16).

9. Unité d'entraînement selon l'une des revendications précédentes, **caractérisée en ce que** sous l'effet de la bande d'entraînement (20) une couche, qui est proche de la surface du matériau de revêtement (16) peut être retirée, cette couche s'accumulant lors du déclenchement de l'entraînement en avant de la bande d'entraînement (20) et réduisant ainsi en supplément l'échange de gaz au niveau de l'interface bande d'entraînement / surfaces des plaques.

10. Tendeur de ceinture pour des ceintures de sécurité comportant au moins une unité d'entraînement selon l'une des revendications précédentes.
